# EUROPÄISCHE PATENTANMELDUNG

(11) **EP 3 396 066 A1**
(43) Veröffentlichungstag der Anmeldung: **31.10.2018**
(21) Anmeldenummer: 17167764.4
(22) Anmeldetag: 24.04.2017
(51) Int. Cl.: E01B 3/44, B29C 43/00

(54) **BAHNSCHWELLE**

(71) Anmelder: Kugi, Wolfgang, 9602 Thörl - Maglern (AT)
(72) Erfinder: Kugi, Wolfgang, 9602 Thörl - Maglern (AT)
(74) Vertreter: Dennemeyer & Associates S.A.

(57) **Zusammenfassung**

Bahnschwelle, welche ein Gemisch aus Klebstoff und Papier umfasst.

## Beschreibung

Die vorliegende Erfindung stellt eine Bahnschwelle, ein Verfahren zur Herstellung einer Bahnschwelle sowie die Verwendung einer bestimmten Mischung in einer Bahnschwelle bereit.

### Hintergrund

Herkömmliche Bahnschwellen bestehen oftmals aus Holz. Derartige Holzschwellen haben jedoch eine begrenzte Lebensdauer, d.h. Probleme betreffend die Haltbarkeit. Grund hierfür ist typischerweise unter anderem ein Pilzbefall. Zum Einsatz kommen deswegen oftmals behandelte bzw. imprägnierte Holzschwellen. Allerdings dampfen die Imprägniermittel mit der Zeit regelmäßig aus, was zu Geruchs- und anderen Umweltbelastungen führt.

Durch diese Problemstellung erfolgt derzeit eine erhöhte Substitution von Holzschwellen durch Betonschwellen. Bahnschwellen aus Beton werden etwa in DE 10 2007 063 455 A1 beschrieben. Allerdings sind Bahnschwellen aus Beton stark schallübertragend, was zu einer erhöhten Lärmbelästigung und damit zu weiteren Anrainerproblemen führt. Außerdem weisen Bahnschwellen aus Beton eine Vorspannung auf und werden dadurch vergleichsweise leicht beschädigt.

Neben Beton sind auch andere Ersatzmittel für den Austausch von Bahnschwellen aus Holz in Erwägung gezogen worden. Aus DE 20 2011 050 077 U1 ist beispielsweise allgemein eine Bahnschwelle für einen Gleiskörper eines Schienenweges bekannt, die einen Grundkörper aufweist, der Sand und Polymere miteinander zu einem Gemisch vermischt und fest verbunden enthält.

Seit den 1970er Jahren testet die Japan Railways Group als Ersatzschwellen ferner langglasfaserverstärkte, Polyurethan-haltige Bahnschwellen. Allerdings werden bei der Herstellung dieser Schwellen typischerweise zunächst Rohlinge geformt, welche vor dem Einsatz als Bahnschwelle nachbearbeitet werden müssen. D.h. die Formgebung wird erst nachträglich spannend hergestellt. Zudem machen die Glasfaserzusätze diese Ersatzschwellen teuer und damit wirtschaftlich weniger attraktiv.

### Zusammenfassung der Erfindung

Es ist eine Aufgabe der vorliegenden Erfindung eine Bahnschwelle bereitzustellen, welche herkömmliche Bahnschwellen ersetzen kann.

Dabei ist es eine besondere Aufgabe der vorliegenden Erfindung eine Bahnschwelle bereitzustellen, welche eine höhere Haltbarkeit als herkömmliche Bahnschwellen hat.

Hierbei ist es ferner eine Aufgabe der vorliegenden Erfindung eine Bahnschwelle bereitzustellen, welche in der Herstellung und Verwendung eine verbesserte Umwelt- und Ressourcenschonung erzielt.

In diesem Zusammenhang ist es auch eine Aufgabe der vorliegenden Erfindung eine Bahnschwelle bereitzustellen, die aus einem Materialgemisch besteht, welches eine direkte Herstellung der Bahnschwelle durch ein Formgebungsverfahren ohne Erfordernis einer weiteren Nachbearbeitung ermöglicht.

Ferner ist es eine Aufgabe der vorliegenden Erfindung, ein Verfahren zur Herstellung der erfindungsgemäßen Bahnschwelle bereitzustellen.

Es ist außerdem eine Aufgabe der vorliegenden Erfindung, eine Verwendung eines erfindungsgemäß eingesetzten Materialgemisches in einer Bahnschwelle bereitzustellen.

Zur Lösung der vorstehenden Aufgabe(n) stellt die vorliegende Erfindung eine Bahnschwelle bereit, die ein Gemisch aus Klebstoff, insbesondere Polyurethan, und Papier umfasst. Eine derartige Bahnschwelle hat eine höhere Haltbarkeit und damit verbesserte Lebensdauer und ist in der Verwendung umweltschonend.

In einer bevorzugten Ausführungsform besteht das Gemisch aus Klebstoff, insbesondere Polyurethan, und Papier, wobei dann vorzugsweise der Klebstoff und insbesondere das Polyurethan 5 bis 70 Gew.-%, mehr bevorzugt 10 bis 65 Gew.-%, weiter bevorzugt 15 bis 60 Gew.-%, noch weiter bevorzugt 20 bis 55 Gew.-%, weitergehend bevorzugt 25 bis 50 Gew.-%, darüber hinaus bevorzugt 30 bis 45 Gew.-% und am meisten bevorzugt 35 bis 40 Gew.-% des Gesamtgewichts des Gemisches aus Papier und Klebstoff, insbesondere Polyurethan, und das Papier die übrigen Gew.-%, d.h. die jeweilige Differenz gegenüber 100 Gew.-% des Gesamtgewichts des Gemisches aus Papier und Klebstoff, insbesondere Polyurethan, ausmacht. Eine derartige Bahnschwelle ist insbesondere vorteilhaft bei der Entsorgung, da eine Verbrennung und damit thermische Nutzung möglich gemacht wird. In einer vorteilhaft günstigen Ausgestaltung besteht die Bahnschwelle ausschließlich aus dem Gemisch aus Papier und Klebstoff, insbesondere Polyurethan.

In anderen vorteilhaften Ausführungsformen umfasst die erfindungsgemäße Bahnschwelle zusätzlich zu Klebstoff und Papier ferner noch mindestens einen Sensor und/oder ein Messtechnikelement, alternativ oder zusätzlich ferner noch mindestens einen farblichen Zusatz. Durch einen Sensor und/oder ein Messtechnikelement können derartige Bauteile, die wertvolle Daten über den Bahnbetrieb liefern können, ohne Erfordernis eines zusätzlichen Arbeitsgangs direkt in die Bahnschwelle integriert werden. Außerdem werden derartige Bauelemente von dem umgebenden Klebstoff/Papiergemisch gegen Umwelteinflüsse geschützt. Ein farblicher Zusatz ermöglicht eine leichtere Zuordnung von Bahnschwellen, etwa zu unterschiedlichen Abnehmern.

Es ist zudem besonders bevorzugt, dass die erfindungsgemäße Bahnschwelle eine mittels Gravur, insbesondere mittels Laser erzeugte ID-Kennung oder einen eindimensionalen Strichcode oder einen zweidimensionalen Strichcode bzw. QR-Code aufweist. Dadurch kann die Auslieferung und der Verbau der Bahnschwelle überwacht werden. Außerdem lässt sich für eine verbaute Bahnschwelle jederzeit das Lebensalter auslesen bzw. überwachen, sodass jederzeit ermittelt werden kann, an welchen Stellen im Bahnnetz wann ein Austausch der Schwellen erfolgen muss.

Eine erfindungsgemäße Bahnschwelle weist bevorzugt eine Breite von 16 bis 32 cm, eine Höhe von 10 bis 26 cm und eine Länge von 200 bis 320 cm auf. Mit diesen Abmessungen kann die erfindungsgemäße Bahnschwelle als Ersatz für nahezu alle üblicherweise verwendeten Bahnschwellen zum Einsatz kommen.

Eine erfindungsgemäße Bahnschwelle enthält ferner als Papier bevorzugt Altpapier. Eine derartige Bahnschwelle ist bei der Herstellung besonders ressourcenschonend.

Zudem ist es bevorzugt, dass das Papier in der erfindungsgemäßen Bahnschwelle aus Papierschnipseln mit einer mittleren Größe von bevorzugt 0,01 bis 60 cm², mehr bevorzugt 0,05 bis 6 cm², noch mehr bevorzugt 0,10 bis 5 cm², weitergehend bevorzugt 0,20 bis 4,50 cm², noch weiter bevorzugt 0,25 bis 4,00 cm², insbesondere bevorzugt 0,50 bis 3,50 cm², besonders bevorzugt 1,00 bis 3,00 und am meisten bevorzugt 1,50 bis 2,50 cm² besteht. Derartige Papierschnipsel zeichnen sich in der Mischung mit dem Klebstoff durch gute Druckfestigkeit sowie ein vorteilhaftes Quell-Schwindverhalten aus.

Zur Lösung der vorstehenden Aufgabe(n) stellt die vorliegende Erfindung zudem ein Verfahren zur Herstellung einer Bahnschwelle bereit mit den Schritten:
i) Vermengen von mindestens Klebstoff, insbesondere Polyurethan, und Papier zu einem Gemisch,
ii) Einfüllen des Gemischs in eine Aushärtungsform und
iii) Aushärten des Gemischs zu einer Bahnschwelle.

Dabei werden als Aushärtungsform vorzugsweise zwei Aluminium-Halbschalen verwendet, welche eine leichte und funktionale Ausgestaltung der Gesamtvorrichtung ermöglichen. Die hierin und vorstehend beschriebenen bevorzugten Ausgestaltungen der erfindungsgemäßen Bahnschwelle sind in äquivalenter Weise auch für das bereitgestellte Verfahren bevorzugt.

Zur Lösung der vorstehenden Aufgabe(n) stellt die vorliegende Erfindung ferner eine Verwendung eines Gemisches umfassend Klebstoff, insbesondere Polyurethan, und Papier in einer Bahnschwelle bereit. Die hierin und vorstehend beschriebenen bevorzugten Ausgestaltungen der erfindungsgemäßen Bahnschwelle sind in äquivalenter Weise auch für die bereitgestellte Verwendung bevorzugt.

Eine Bahnschwelle im Sinne der vorliegenden Erfindung ist ganz allgemein jener Teil eines Eisenbahnoberbaus, der die Schienen trägt und diese üblicherweise in ihrer Lage fixiert. Kunststoff-Eisenbahnschwellen für Bahnanwendungen werden z.B. in der Norm ISO 12856-1:2014-03 beschrieben.

Klebstoff im Sinne der vorliegenden Erfindung ist ein Prozesswerkstoff, der zum Kleben verschiedener Werkstoffe verwendet wird. Nach ÖNORM und DIN EN 923 wird ein Klebstoff beispielsweise definiert als: nichtmetallischer Werkstoff, der Fügeteile durch Flächenhaftung (Adhäsion) und innere Festigkeit (Kohäsion) verbinden kann.

Polyurethan im Sinne der vorliegenden Erfindung ist ein Kunststoff bzw. Kunstharz, das durch eine Polyadditionsreaktion von mehrwertigen Alkoholen (Diole, Polyole) mit mehrwertigen Isocyanaten (Diisocyanate, Polyisocyanate) gebildet wird. Polyurethan enthält die sogenannte Urethan-Gruppe (-NH-CO-O-). Wie hier verwendet schließt Polyurethan lineares Polyurethan sowie vernetztes Polyurethan ein.

Papier im Sinne der vorliegenden Erfindung meint Papier im technisch üblichen Sinne. In der Erfindung eingesetztes Papier kann folgende Definitionen einzeln oder gemeinsam erfüllen:
"Papier ist ein flächiger, im Wesentlichen aus Fasern pflanzlicher Herkunft bestehender Werkstoff, der durch die Entwässerung einer Faserstoffaufschwemmung auf einem Sieb gebildet wird. Dabei entsteht ein Faserfilz, der anschließend verdichtet und getrocknet wird." (nach DIN 6730; letzte Version DIN 6730:2011-02)
Und/oder
"Flächiger Werkstoff aus mechanisch, chemisch-thermomechanisch oder chemisch aufgeschlossenen Pflanzenfasern (Holzstoff, Zellstoff, Altpapier). Es ist ein durch Eigenverklebung und Verfilzung von Fasern entstandenes, blattartiges Gebilde".

Im Sinne der vorliegenden Erfindung ist Altpapier der Oberbegriff für Papiere, Pappen und Kartons, die nach Gebrauch erfassbar anfallen. Anfallstellen sind üblicherweise Privathaushalte sowie öffentliche und gewerbliche Einrichtungen. Ferner fallen unter den Begriff Altpapier wie hier verwendet auch gewerbliche Produktionsabfälle aus der Papiererzeugung und -verarbeitung. In der Praxis werden über 40 Sorten von Altpapier gehandhabt, die beispielsweise in der Liste der europäischen Standardsorten und ihrer Qualitäten (EN 643) normiert sind. Erfindungsgemäß kommt bevorzugt die Standardsorte 1.11 zum Einsatz.

### Kurze Beschreibung der Zeichnungen

Die vorliegende Erfindung wird mit Bezug auf die angefügten Figuren beschrieben. Dabei zeigt
Fig. 1 eine erfindungsgemäß eingesetzte Zusammensetzung einer Vorrichtung zur Verpressung; und
Fig. 2 eine Ansicht der erfindungsgemäß eingesetzten Vorrichtung zur Verpressung während der Aushärtungszeit.

### Detaillierte Beschreibung der Erfindung

Gemäß der vorliegenden Erfindung werden Bahnschwellen bereitgestellt, die vorzugsweise eine oder mehrere der gestellten Aufgaben lösen. Der erfindungsgemäße Lösungsansatz besteht darin, neuartige Bahnschwellen aus einem Verbundmaterial, bestehend aus Papier in Kombination mit einem Klebstoff wie beispielsweise Polyurethan herzustellen.

Die mechanischen Anforderungen an das neuartige Material sind im Allgemeinen durch die Materialkennwerte bzw. Festigkeitswerte von Eichenholz oder Buchenholz vorgegeben.

Im Prinzip sollten jegliche derzeit vorhandenen Bahnschwellen durch die erfindungsgemäße Bahnschwelle bzw. Verbundschwelle (VS) ersetzt werden können (in Bezug auf die Form). Daher sind die Außenabmessungen der VS entsprechend der Vielzahl an derzeitigen im Einsatz befindlichen Bahnschwellen (Holzschwellen, Betonschwellen) nicht relevant. Bei einer herkömmlichen Gleisschwelle kann man von Abmessungen ausgehen, die eine Breite von 16 bis 32 cm, insbesondere ca. 26 cm, sowie eine Höhe von 10 bis 26 cm, insbesondere ca. 16 cm, und eine Länge von 200 bis 320 cm, insbesondere ca. 260 cm aufweisen.

Die wesentlichen Neuerungen der VS im Verhältnis zu derzeit verwendeten Bahnschwellen lauten wie folgt:

Erhebliche Erhöhung der Lebensdauer bzw. Haltbarkeit gegenüber Holzschwellen in Bezug auf Witterungseinflüsse sowie Schädlingsbefall durch beispielsweise Pilze.

Drastische Verringerung der Umweltbelastung durch Emissionen sowie Abgaben von Schadstoffen ins Grundwasser gegenüber behandelten Holzschwellen. Wegfall von Geruchsbelästigung.

Wegfall von naturbedingten Fehlerstellen bzw. Festigkeitsschwankungen über die gesamte Bauteillänge bei Verwendung von Holzschwellen.

Unbedenkliche Entsorgung durch beispielsweise thermische Verwertung in beispielsweise Müllverbrennungsanlagen.

Möglichkeit des Einbaues von Beschlägen, für Befestigungen bereits in der Produktion, für den rascheren Einbau vor Ort.

Erhöhte Riss-Resistenz bei Beschädigungen verglichen mit Betonschwellen.

Deutliche Verringerung der Lärmbelastung im Verhältnis zu Betonschwellen.

Möglichkeit zur Integration von Sensoren und/oder Messtechnik wie beispielsweise Induktionsschleifen, Drucksensoren usw. bereits in der Produktion. Folglich ergibt sich eine erhöhte Haltbarkeit der integrierten Bauteile gegenüber äußeren mechanischen und/oder chemischen Einflüssen.

Keine Verwendung von Erdölprodukten für die Herstellung. Ausschließliche Verwendung von nachwachsenden bzw. erneuerbaren Rohstoffen.

Eventualität der Einbringung von farblichen Zusätzen zu Markierungs- oder Orientierungszwecken.

Automatische Kennzeichnung jedes VS mit einer ID-Kennung für die Qualitätssicherungen, sowie genaue Nachverfolgung aller Fertigungsparameter. Ebenso kann somit direkt am Produkt das Gewährleistungsdatum ersichtlich sein.

### Eigenschaften des VS Materials

Die Überprüfung und Evaluierung des Materials kann durch den TÜV mit der Vorlage des entsprechenden Berichtes erfolgen.

Die erfindungsgemäß bevorzugten Verhältnisse von Papier zu Klebstoff, insbesondere Papier zu Polyurethan, wurden bereits vorstehend angegeben. Ein erfindungsgemäß gut geeignetes Mengenverhältnis von Papier zu Klebstoff ist außerdem z.B. 75 Gew.-% zu 25 Gew.-%, beispielsweise 75 kg zu 25 kg, wobei eine geringere Klebstoffmenge eine wesentlich höhere Rentabilität gewährt. Ein Mischungsverhältnis von 50 Gew.-% Klebstoff zu 50 Gew.-% Papier ist noch geeignet, größere Mengen an Klebstoff sind gewöhnlich aufgrund wirtschaftlicher Erwägungen nachteilig.

Das Material für die erfindungsgemäße Bahnschwelle weist vorzugsweise eine Zugfestigkeit in Faserrichtung angelehnt an die ÖNORM EN 408 - Holzbauwerke - Bauholz für tragende Zwecke und Brettschichtholz (Ausgabe 2010-12-01, Punkt 13) im Bereich von 40 N/mm² bis 100 N/mm² auf.

Das Material für die erfindungsgemäße Bahnschwelle weist vorzugsweise eine Druckfestigkeit in Faserrichtung angelehnt an die ÖNORM EN 408 - Holzbauwerke - Bauholz für tragende Zwecke und Brettschichtholz (Ausgabe 2010-12-01, Punkt 15) im Bereich von 30 N/mm² bis 80 N/mm² auf.

Das Material für die erfindungsgemäße Bahnschwelle weist vorzugsweise eine Biegefestigkeit in Faserrichtung angelehnt an die ÖNORM EN 408 - Holzbauwerke - Bauholz für tragende Zwecke und Brettschichtholz (Ausgabe 2010-12-01, Punkt 19) im Bereich von 40 N/mm² bis 120 N/mm² auf.

Das Material für die erfindungsgemäße Bahnschwelle weist vorzugsweise einen Brennwert (Ho) wasserfrei nach DIN EN 15400(PL) von mindestens 15.000 kJ/kg, mehr bevorzug von mindestens 16.000 kJ/kg, noch mehr bevorzugt von mindestens 17.000 kJ/kg, weitergehend bevorzugt von mindestens 18.000 kJ/kg und am meisten bevorzugt von 19.400 kJ/kg oder mehr auf. Wie hier verwendet ist die DIN EN 15400(PL) akkreditiert nach ISO/IEC17025:2005 (Akkreditierungsurkunde: D-PL-14087-01-00).

Das Material für die erfindungsgemäße Bahnschwelle weist vorzugsweise einen Heizwert, unterer, wasserfrei nach DIN EN 15400(PL) von mindestens 14.000 kJ/kg, mehr bevorzug von mindestens 15.000 kJ/kg, noch mehr bevorzugt von mindestens 16.000 kJ/kg, weitergehend bevorzugt von mindestens 17.000 kJ/kg und am meisten bevorzugt von 18.200 kJ/kg oder mehr auf. Wie hier verwendet ist die DIN EN 15400(PL) akkreditiert nach ISO/IEC17025:2005 (Akkreditierungsurkunde: D-PL-14087-01-00).

Ein bevorzugtes Material für die erfindungsgemäße Bahnschwelle weist entsprechend eine Zugfestigkeit im Bereich von 40 N/mm² bis 100 N/mm², eine Druckfestigkeit im Bereich von 30 N/mm² bis 80 N/mm² und eine Biegefestigkeit in Faserrichtung im Bereich von 40 N/mm² bis 120 N/mm² auf, jeweils bestimmt wie vorstehend angegeben.

Ein ebenfalls bevorzugtes Material für die erfindungsgemäße Bahnschwelle weist entsprechend einen Brennwert von 19.400 kJ/kg oder mehr und einen Heizwert von 18.200 kJ/kg oder mehr auf, jeweils bestimmt wie vorstehend angegeben.

Ein besonders bevorzugtes Material für die erfindungsgemäße Bahnschwelle weist eine Zugfestigkeit im Bereich von 40 N/mm² bis 100 N/mm², eine Druckfestigkeit im Bereich von 30 N/mm² bis 80 N/mm², eine Biegefestigkeit in Faserrichtung im Bereich von 40 N/mm² bis 120 N/mm², einen Brennwert von 19.400 kJ/kg oder mehr und einen Heizwert von 18.200 kJ/kg oder mehr auf, jeweils bestimmt wie vorstehend angegeben.

### Papier

Zur Herstellung der VS werden Papierschnipsel erzeugt. Aus ökologischen wie auch wirtschaftlichen Gründen bietet sich hiermit Altpapier in Form von Zeitungen, Zeitschriften, Illustrierten usw. an. Diese werden beispielsweise mechanisch in die entsprechende Größe gehackt. Die bevorzugte Größe liegt bei etwa bevorzugt 0,01 bis 60 cm², mehr bevorzugt 0,05 bis 6 cm², noch mehr bevorzugt 0,10 bis 5 cm², weitergehend bevorzugt 0,20 bis 4,50 cm², noch weiter bevorzugt 0,25 bis 4,00 cm², insbesondere bevorzugt 0,50 bis 3,50 cm², besonders bevorzugt 1,00 bis 3,00 und am meisten bevorzugt 1,50 bis 2,50 cm². Speziell im Hinblick auf Druckfestigkeit und Quell-Schwindverhalten sind derartige Papierschnipsel bevorzugt.

Zusätzlich oder alternativ werden erfindungsgemäß jedoch auch Kartonprodukte verwendet. Wichtig sind hierbei die zu erreichenden Festigkeitswerte, da Karton in der Regel eine geringere Dichte bzw. höhere Porigkeit aufweist.

### Produktionsfluss

Der folgende Ablaufplan erklärt beispielhafte Schritte zur Herstellung der erfindungsgemäßen VS.

Auf Grund des relativ hohen Materialbedarfes erfolgen Anlieferungen sowie auch der Abtransport vorzugsweise über den Schienenverkehr. Es erfolgt somit die Erstellung eines entsprechenden Bahnnetzes im Betriebsgelände zur jeweils separaten Entladung von Papier und Klebstoff sowie zur Beladung/Versand der fertigen VS.

Einlagerung von Füllmaterial - Papier (beispielsweise gesammeltes Altpapier) in entsprechend klimatisierten (speziell berücksichtigt Feuchtigkeit) Bunkern. Gemäß der benötigten Produktionsmenge an Papier erfolgt die automatische Entnahme durch beispielsweise eine Krananlage zur Beschickung des Zerkleinerers (etwa erhältlich von Lindner-Recyclingtech GmbH). Die daraus erhaltenen Papierschnipsel (PS) werden in einem PS-Tank, welcher als Puffer (Buffer) zur Produktionslinie geschalten ist, aufgefangen. Über Rohrleitungen werden die PS abgesaugt und zu den Produktionslinien transportiert.

Der gelieferte bevorzugte Polyurethanklebstoff (PU) wird in entsprechenden Silotanks eingelagert wie auch die ggf. benötigten Zusätze (Zusätze zur Verbesserung der UV-Beständigkeit, zur Beschleunigung der Aushärtezeit, usw.). Über Rohrleitungen erfolgen die Zubringungen des PU, sowie ggf. entsprechend getrennt davon die dazugehörigen Zusätze, zu den einzelnen Produktionslinien.

Die Produktionslinien sind bis auf die Versorgung mit den Produkt-Komponenten in ihrer Arbeitsweise autark. Bei der Produktionslinie erfolgt die Mischung der PS mit dem PU. Im Anschluss erfolgt direkt die Mengenkommissionierung entsprechend der benötigten Menge zur Füllung der Aushärtungsform (AF). Durch einen statischen Zwangsmischer wird die Masse mittels hydraulischer Kraft in die AF gepresst. Der angewandte Pressdruck liegt zur Erzielung einer ausreichenden Festigkeit vorzugsweise bei mindestens 20 bar, weiter bevorzugt mindestens über 20 bar. Zur Vermeidung eines übermäßigen seitlichen Ausquellens von Klebstoff liegt der angewandte Pressdruck ferner bevorzugt bei höchstens 1500 bar, weiter bevorzugt unter 1500 bar. Der optimale Arbeitsbereich für den Pressdruck liegt damit in einem Bereich von gleich oder größer 20 bar bis gleich oder kleiner 1500 bar. Außerdem erfolgt in diesem Schritt, sofern erforderlich, die Beimischung des Zusatzes für eine Beschleunigung der Aushärtezeit. Dieser Vorgang bzw. die Befüllung der AF erfolgt vorzugsweise minütlich. Zuvor wurde die AF mit Stickstoff ausgeblasen, um die Luft und den damit verbundenen Wassergehalt (H2O) zu entfernen.

Die AF in der Produktionslinie befindet sich auf einem zyklischen Weg. Durch eine Vielzahl an AF pro Produktionslinie (etwa 30 Stück pro Linie) erfolgt die Aushärtung in der Form, wobei kurz vor der wiederholten Befüllung der automatische Auswurf des fertigen Produktes erfolgt. Prinzipiell wird die AF aus zwei Aluminium-Halbschalen, bevorzugt mit Teflonbeschichtung, bestehen, welche im Inneren die Form der VS ergibt. Sämtlich benötigte Komponenten wie Beschläge, Befestigungen oder mögliche Sensoren werden vor der Schließung und der anschließenden Befüllung automatisch eingebettet.

Auf entsprechenden Förderanlagen werden die fertigen VS dann weiter geliefert, kommissioniert und eingelagert.

### Ausführungsbeispiel

Faserkomponente - Papier: Herstellung von Papierschnipseln mittels Gartenhacker aus Zeitungen.

Die Zeitungen werden in den Gartenhacker als Ganzes eingebracht. Durch die rotierenden Messerscheiben und Klingen im Gartenhacker werden die Zeitungen zerkleinert. Sollten die erhaltenen Papierschnipsel noch zu groß sein, so kann der Vorgang auch mehrmals wiederholt werden. Die erhaltenen Papierschnipsel werden ein weiteres Mal in den Gartenhacker gegeben. Der benötigte Gewichtsanteil für das geplante Bauteil wird in einen Kübel (15 Liter Volumen) gegeben und mittels Waage eingemessen (im Beispiel 200g Papierschnipsel).

### Kleberkomponente - Polyurethankleber: Abmischen der Klebstoffkomponenten

Die einzelnen Klebstoffkomponenten werden mittels Waage im richtigen Verhältnis wie auch der richtigen Menge in einem Becher (0,5 Liter Volumen) zusammengemengt. Die erhaltene Klebstoffmenge (im Beispiel 200g) wird dann gut verrührt entsprechend der Vorgaben des Klebstoffherstellers.

In diesem Ausführungsbeispiel kommt dabei das Produkt LOCTITE UK 8101 / LOCTITE UK 5400 der Firma Henkel zum Einsatz. LOCTITE UK 8101 / LOCTITE UK 5400 hat die folgenden Produkteigenschaften:
Technologie Polyurethan - Produkttyp PU-Klebstoff
   Aushärtung: Polyaddition - Beschaffenheit: Lösungsmittelfrei
   Komponenten: zwei-komponentig
   Komponente A - Harz
   Komponente B - Härter
Anwendung
   Farbe (Komp. A): Beige
   Farbe (Komp. B): Braun
Mischungsverhältnis, nach Gewicht
   Komp. A : Komp. B = 4 : 1
Mischungsverhältnis, nach Volumen
   Komp. A : Komp. B = 3,4 : 1

LOCTITE UK 8101 / LOCTITE UK 5400 ist ein lösungsmittelfreier Zweikomponenten-Klebstoff auf Polyurethanbasis. Die Harzkomponente (Komponente A) ist auf Basis hydroxygruppenhaltiger organischer Verbindungen, die Härterkomponente (Komponente B) auf Basis von Isocyanaten aufgebaut. Durch Vermischen der beiden Komponenten im Mischverhältnis 4 : 1 entsteht aufgrund einer chemischen Reaktion ein hartelastischer Klebstoff. Das Produkt weist nach der Aushärtung keine messbare Volumenänderung auf.

Komponente A - Loctite UK 8101:
Konsistenz: flüssig
Dichte, g/cm³: 1,4 bis 1,5
Viskosität, Brookfield - RVT, 20°C, mPa.s: 6.000 bis 10.000

Komponente B - Loctite UK 5400:
Konsistenz: dünnflüssig
Dichte, g/cm³: 1,17 bis 1,27
Viskosität, Brookfield - RVT, 20°C, mPa.s: 250 bis 350

Mischung (Komponente A + B):
Konsistenz: flüssig
Viskosität, Brookfield - RVT, 25°C, mPa.s: 2.500 bis 2.800
Topfzeit (125g, 20 °C), min: 50 bis 70
Offene Zeit, min: 120 bis 150
Aushärtezeit (23°C), Tage: 5 bis 7
Anfangsfestigkeit (23 °C), Std.: 5 bis 8
Zugscherfestigkeit, MPa (EN 1465): >6
Gebrauchstemperatur, °C: -40 bis 80

### Verarbeitung:

Komponente A wird vor der Verarbeitung langsam aufgerührt bis sie homogen ist. Die Komponenten werden von Hand, mit Rührvorrichtung oder Zweikomponenten-Mischanlagen im angegebenen Mischungsverhältnis gemischt. Dabei sollte das Einbringen von Luft vermieden werden. Nach dem Mischen sollen keine Schlieren erkennbar sein. Der Klebstoff kann nur eine begrenzte Zeit appliziert werden (Topfzeit). Danach geliert die Mischung und wird für die Verarbeitung unbrauchbar. Es wird deshalb nur die Menge angemischt, die innerhalb der Topfzeit verarbeitet werden kann. Die Topfzeit ist abhängig von der Menge und Temperatur des Ansatzes. Bei größeren Mengen oder erhöhten Temperaturen wird die Topfzeit verkürzt. Niedrige Temperaturen hingegen verlängern die Topfzeit. Die Klebstoffkomponenten sollen vor und während der Verarbeitung nicht mit Feuchtigkeit in Berührung kommen.

### Aushärtung:

LOCTITE UK 8101 / LOCTITE UK 5400 kann bei Raumtemperatur oberhalb von 15°C und erhöhter Temperatur (bis 60°C) ausgehärtet werden. Die Härtungszeiten werden durch Temperaturerhöhung oder die Zugabe eines Beschleunigers wie z.B. LOCTITE UK 6100 reduziert, wobei die gleichzeitige Verkürzung der Verarbeitungszeit (Cremezeit, offene Zeit) zu beachten ist. Während der Abbindezeit (Anfangsfestigkeit) ist auf ausreichend Kontaktdruck (Stapeldruck, Pressen, Klammern) zu achten, damit die zu verklebenden Teile mit dem Klebstoff vollflächig in Kontakt gehalten werden.

Mischung der Komponenten: Zusammenführung / Mischen der Faser- und Kleberkomponente

Zu den Faserkomponenten im Kübel wird nun die erhaltene Klebstoffkomponente möglichst regelmäßig eingemischt. Durch knetartige Bewegungen im Kübel mit den Händen werden somit die Komponenten besser und gleichmäßig vermengt. Wenn die Vermengung dann gleichmäßig ist, hat man das Grundmaterial (im Beispiel 400g) erhalten.

### Formgebung: Verpressen des Grundmaterials in die gewünschte Form

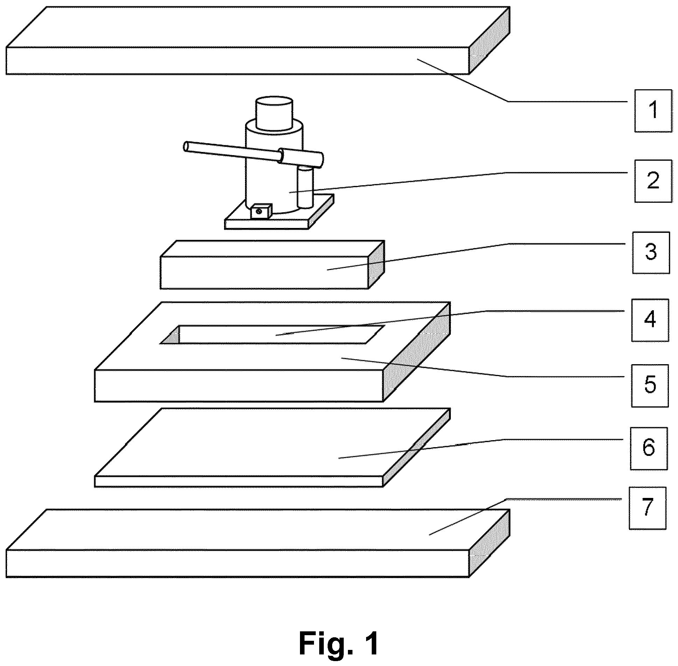

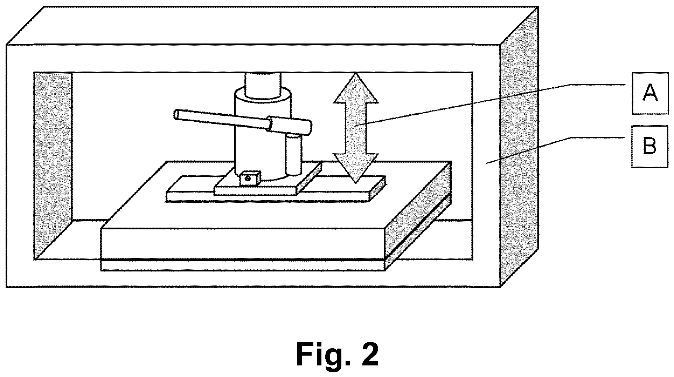

Es wird Bezug auf die Figuren 1 und 2 genommen. Die Grundplatte kommt auf das Untere- Widerlager **7**. Auf die Grundplatte **6** wird die Pressform **5** aufgelegt. Das zuvor zubereitete Grundmaterial wird nun aus dem Kübel genommen und gleichmäßig in die Ausnehmung **4** der Pressform **5** eingebracht. Die Ausnehmung **4** (im Beispiel 270 mm Länge und 35 mm Breite) geht durch die gesamte Pressform **5** wie ein Durchgangsloch (im Beispiel ist dies eine Dicke/Tiefe von 40 mm). Die Gegenform **3** entspricht genau der Ausnehmung der Pressform **5**. Mit der Gegenform **3** wird nun das Grundmaterial verdichtet. Die dazu notwendige Kraft wird mit einem hydraulischen Wagenheber **2** eingebracht bis der notwenige Verpressungsdruck (im Beispiel 155 bar) erreicht ist. Für die Aufnahme der Kräfte und zum Erreichen des Pressdruckes **A** erfolgt die Verwendung eines massiven Stahlrahmens **B**. Unter diesem Druck erfolgt dann das Aushärten des Grundmaterials innerhalb der entsprechenden Aushärtungszeit, verbunden mit der herrschenden Raum- bzw. Bauteiltemperatur. Nach Ablauf der Aushärtungszeit wird der Pressdruck **A** gelöst und der Aufbau kann wieder zerlegt / vereinzelt werden, um das fertige Produkt (im Beispiel 400g Masse, 270 mm Länge, 35 mm Breite, 26 mm Dicke) zu erhalten.

### Bezugszeichenliste

- 1.: Oberes- Widerlager - zur Aufnahme des Pressdruckes nach oben
- 2.: Hydraulischer Wagenheber
- 3.: Gegenform - welche genau in die Ausnehmung der Pressform passt
- 4.: Ausnehmung - Einfüllen des Grundmaterials
- 5.: Pressform - mit Ausnehmung
- 6.: Grundplatte
- 7.: Unteres- Widerlager - zur Aufnahme des Pressdruckes nach unten
- A.: Pressdruck - Hub welcher durch den hydraulischen Wagenheber erzeugt wird
- B.: Stahlrahmen - zur Aufnahme der Kräfte durch den Pressdruck als Oberes- und Unteres- Widerlager

## Patentansprüche

1. Bahnschwelle umfassend ein Gemisch aus Klebstoff und Papier.

2. Bahnschwelle nach Anspruch 1, wobei der Klebstoff Polyurethan ist.

3. Bahnschwelle nach Anspruch 1 oder 2, wobei das Gemisch aus Klebstoff, insbesondere Polyurethan, und Papier besteht.

4. Bahnschwelle nach Anspruch 3, wobei der Klebstoff, insbesondere Polyurethan, vorzugsweise 5 bis 70 Gew.-%, mehr bevorzugt 10 bis 65 Gew.-%, weiter bevorzugt 15 bis 60 Gew.-%, noch weiter bevorzugt 20 bis 55 Gew.-%, weitergehend bevorzugt 25 bis 50 Gew.-%, darüber hinaus bevorzugt 30 bis 45 Gew.-% und am meisten bevorzugt 35 bis 40 Gew.-% des Gesamtgewichts des Gemisches aus Papier und Klebstoff, insbesondere Polyurethan, und das Papier die übrigen Gew.-%, d.h. die jeweilige Differenz gegenüber 100 Gew.-% des Gesamtgewichts des Gemisches aus Papier und Klebstoff, insbesondere Polyurethan, ausmacht.

5. Bahnschwelle nach Anspruch 1, die ferner mindestens einen Sensor und/oder ein Messtechnikelement umfasst.

6. Bahnschwelle nach Anspruch 1, die ferner mindestens einen farblichen Zusatz umfasst.

7. Bahnschwelle nach einem der Ansprüche 1 bis 5, die eine mittels Gravur, insbesondere mittels Laser erzeugte ID-Kennung oder einen eindimensionalen Strichcode oder einen zweidimensionalen Strichcode bzw. QR-Code aufweist.

8. Bahnschwelle nach einem der vorhergehenden Ansprüche, wobei die Bahnschwelle eine Breite von 16 bis 32 cm, eine Höhe von 10 bis 26 cm und eine Länge von 200 bis 320 cm aufweist.

9. Bahnschwelle nach einem der vorhergehenden Ansprüche, wobei das Papier aus Altpapier besteht.

10. Bahnschwelle nach einem der vorhergehenden Ansprüche, wobei das Papier aus Papierschnipseln mit einer mittleren Größe von bevorzugt 0,01 bis 60 cm², mehr bevorzugt 0,05 bis 6 cm², noch mehr bevorzugt 0,10 bis 5 cm², weitergehend bevorzugt 0,20 bis 4,50 cm², noch weiter bevorzugt 0,25 bis 4,00 cm², insbesondere bevorzugt 0,50 bis 3,50 cm², besonders bevorzugt 1,00 bis 3,00 und am meisten bevorzugt 1,50 bis 2,50 cm² besteht.

11. Verfahren zur Herstellung einer Bahnschwelle mit den Schritten:
i) Vermengen von mindestens Klebstoff und Papier zu einem Gemisch,
ii) Einfüllen des Gemischs in eine Aushärtungsform und
iii) Aushärten des Gemischs zu einer Bahnschwelle.

12. Verfahren nach Anspruch 11, wobei der Klebstoff Polyurethan ist.

13. Verfahren nach Anspruch 11 oder 12, wobei als Aushärtungsform zwei Aluminium-Halbschalen verwendet werden.

14. Verwendung eines Gemisches umfassend Klebstoff und Papier in einer Bahnschwelle.

15. Verwendung nach Anspruch 12, wobei der Klebstoff Polyurethan ist.
